# EUROPEAN PATENT APPLICATION

(11) **EP 3 214 596 A1**
(43) Date of publication of application: **06.09.2017**
(21) Application number: 15856038.3
(22) Date of filing: 26.10.2015
(51) Int. Cl.: G06Q 50/14

(54) **INFORMATION PROCESSING DEVICE, INFORMATION PROCESSING METHOD, AND PROGRAM**

(30) Priority: 28.10.2014 JP 2014219693
(71) Applicant: Yamaguchi, Shonoshin, Koriyama-shi, Fukushima 963-8025 (JP)
(72) Inventor: Yamaguchi, Shonoshin, Koriyama-shi, Fukushima 963-8025 (JP)
(74) Representative: Ström & Gulliksson AB
(86) International application number: PCT/JP2015/080132
(87) International publication number: WO 2016/068086

(57) **Abstract**

The purpose of the present invention is to make it possible to easily configure a so-called semi-order tour that is suitable for a user. Provided is an information processing device in which a reception unit 62 receives plan information selected by a user from among a plurality of pieces of plan information within a plan information database 71 in which are stored a plurality of pieces of plan information that include content relating to a plan for an activity, an ID for the plan, and limiting conditions relating to the plan. A permutation setting unit 63 sets the permutations for each of the plans for an activity specified by each of the pieces of plan information for a user within the range of the limiting conditions for the plan that are included in each of the received pieces of plan information.

## Description

### TECHNICAL FIELD

The present invention relates to an information processing device, an information processing method and a program.

### BACKGROUND ART

Conventionally, organized trips planned by travel agencies are generally package tours in which transportation, accommodations and the like are set. In such package tours, the addition of optional tours such as sightseeing and sports is widely performed. Although in package tours, transportation, accommodations and even meal places are often fixed, and thus the range of traveler's choice is limited, the range of traveler's choice is extended by the performance of such optional tours (for example, see patent document 1).

Patent Document 1: Japanese Unexamined Patent Application, Publication No. 2012-252414

### DISCLOSURE OF THE INVENTION

### Problems to be Solved by the Invention

Furthermore, in order to further extend the range of traveler's choice, it is required to be able to select a plurality of optional tours in one day. However, travelers or travel agencies often manually combine a plurality of optional tours, and thus it is difficult for users to form suitable combinations. Furthermore, although it is also required to produce a so-called semi-ordered tour in which a plurality of activities is combined without optional tours being simply incorporated into package tours, the conditions remain the same in that the activities are manually combined. Hence, it is required to make it possible to easily configure the so-called semi-ordered tour that is suitable for the user.

The present invention is made in view of the conditions described above, and has an object to make it possible to easily configure the so-called semi-ordered tour that is suitable for the user.

### Means for Solving the Problems

In order to achieve the above object, an information processing device according to an aspect of the present invention includes: a reception means which receives, among a plurality of pieces of plan information that includes details of a plan of an activity, the ID of the plan and constraint conditions of the plan and that are stored in a database, pieces of plan information selected by a user; and a setting means which sets, for the user, within a range of constraint conditions of plans included the pieces of plan information received, respectively, sequences of the plans of activities identified by each of the pieces of plan information.

In an information processing device according to another aspect of the present invention, the reception means further receives constraint conditions on a side of the user together with the pieces of plan information selected by the user, and the setting means further sets, for the user, within a range of not only the constraint conditions of the plans included in the pieces of plan information received, respectively, but also the constraint conditions on the side of the user, sequences of the plans of the activities identified by each of the pieces of plan information.

In an information processing device according to another aspect of the present invention, constraint conditions of a predetermined plan include a condition on the number of users, and the setting means can set, for a plurality of users who selects the predetermined plan, within a range of the constraint conditions of the predetermined plan, sequences of the plans of the activities.

An information processing method and a program according to an aspect of the present invention are a method and a program which correspond to the information processing device according to the aspect of the present invention described above.

### Effects of the Invention

According to the present invention, it is possible to easily configure the so-called semi-ordered tour that is suitable for the user.

### BRIEF DESCRIPTION OF THE DRAWINGS

Fig. 1 is a diagram showing the configuration of an information processing system according to an embodiment of the present invention;
Fig. 2 is a block diagram showing the hardware configuration of a server which is an embodiment of an information processing device of the present invention in the information processing system of Fig. 1;
Fig. 3 is a functional block diagram showing a functional configuration for performing semi-ordered tour processing in the functional configuration of the server of Fig. 2;
Fig. 4 is a diagram showing an example of the structure of plan information DB in Fig. 3; and
Fig. 5 is a flowchart illustrating the flow of semi-ordered production processing which is performed by the server of Fig. 2 having the functional configuration of Fig. 3.

### PREFERRED MODE FOR CARRYING OUT THE INVENTION

An embodiment of the present invention will be described below with reference to drawings.

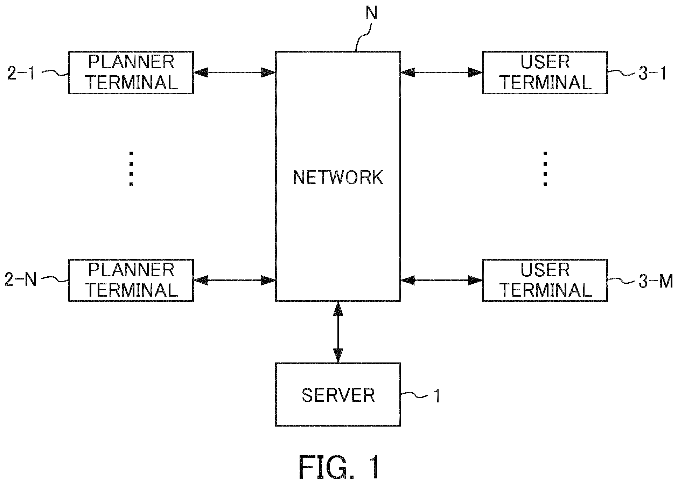

Fig. 1 is a diagram showing the configuration of an information processing system according to the embodiment of the present invention. The information processing system shown in Fig. 1 is configured by connecting a server 1, planner terminals 2-1 to 2-N and user terminals 3-1 to 3-M to each other through a network N.

The present information processing system is applied when a service is provided where a plurality of activities planned respectively by individual activity planners is combined as one tour and where the tour is presented to a user. The provider of the present service is assumed to manage the server 1. The management described here includes management which is directly managed by the provider itself and management which is indirectly managed such as by subcontracting the management to a separate party such as the management company of the server. The activity includes a so-called optional tour and refers to the details of actions of the user in a period of all the schedule of the travel of the user. One activity is planned by an arbitrary party which can contact the provider of the present service. In the following discussion, the party described above is referred to as a "planner". The planner may only plan an activity and may not participate in it or may participate in the activity as a guide or the like. In the present embodiment, N planners (N is an arbitrary integer value equal to or more than 1) are assumed to use the planner terminals 2-1 to 2-N, respectively. However, in the following description, when it is not necessary to individually distinguish the planner terminals 2-1 to 2-N, they are collectively and simply referred to a "planner terminal 2". In the present embodiment, M users (M is an arbitrary integer value which is independently of N and which is equal to or more than 1) are assumed to use the user terminals 3-1 to 3-M, respectively. However, in the following description, when it is not necessary to individually distinguish the user terminals 3-1 to 3-M, they are collectively and simply referred to a "user terminal 3".

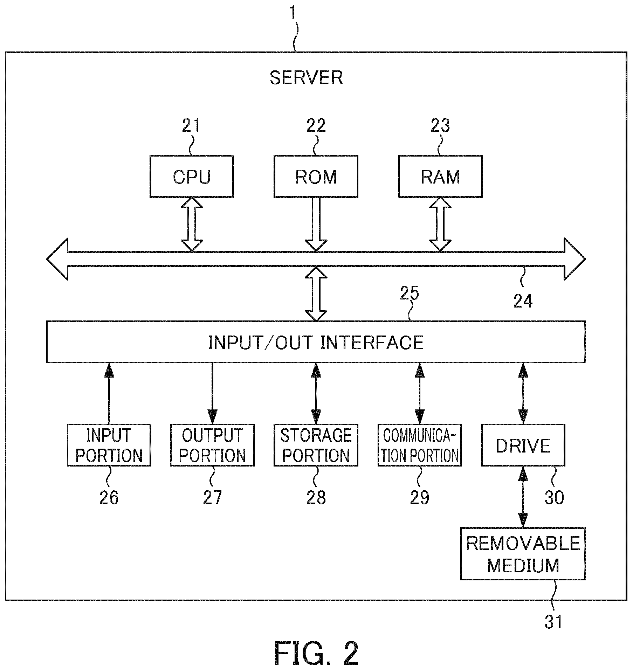

Fig. 2 is a block diagram showing the hardware configuration of the server 1 which is an embodiment of the information processing device of the present invention in the information processing system of Fig. 1.

The server 1 includes a CPU (Central Processing Unit) 21, a ROM (Read Only Memory) 22, a RAM (Random Access Memory) 23, a bus 24, an input/out interface 25, an input portion 26, an output portion 27, a storage portion 28, a communication portion 29 and a drive 30.

The CPU 21 performs various types of processing according to programs recorded in the ROM 22 or programs loaded from the storage portion 28 onto the RAM 23.

In the RAM 23, data and the like which are necessary for the CPU 21 to perform various types of processing are also stored as necessary.

The CPU 21, the ROM 22 and the RAM 23 are connected through the bus 24 to each other. The input/out interface 25 is also connected to the bus 24. The output portion 27, the input portion 26, the storage portion 28, the communication portion 29 and the drive 30 are connected to the input/out interface 25.

The input portion 26 is formed with a keyboard, various types of buttons and the like, and various types of information are input thereto according to the instruction operations of an operator. The output portion 27 is formed with a display, a speaker and the like, and outputs an image and a sound. The storage portion 28 is formed with a hard disk, a DRAM (Dynamic Random Access Memory) or the like, and stores various types of data. The communication portion 29 controls communication with other devices (in the example of Fig. 1, the planner terminal 2 and the user terminal 3) through the network N including the Internet.

A removable medium 31 which is formed with a magnetic disk, an optical disk, a magneto-optical disk or a semiconductor memory is fitted to the drive 30 as necessary. A program which is read by the drive 30 from the removable medium 31 is installed in the storage portion 28 as necessary. The removable medium 31 can also store, as in the storage portion 28, various types of data stored in the storage portion 28.

The CPU 21 of the server 1 configured as described above performs a series of processing steps up to the setting of sequences of the plans of a plurality of activities including the plan of an activity desired by the user. An aggregation of the plans of the activities in the sequences set as described above is a so-called schedule (the schedule of the travel) of the tour of the user. In other words, it is possible for the user to form a semi-ordered tour. Hence, in the following discussion, the processing described above is referred to as "semi-ordered tour production processing".

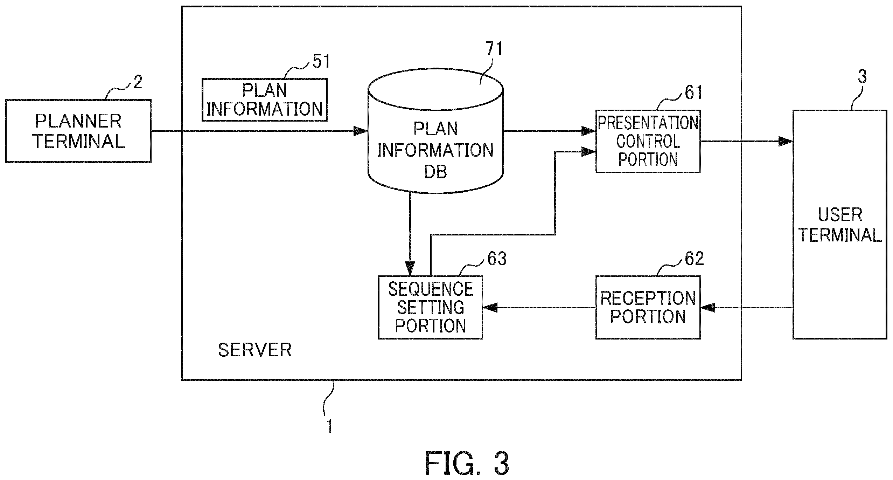

Fig. 3 is a functional block diagram showing a functional configuration for performing the semi-ordered tour processing in the functional configuration of the server 1.

When the performance of the semi-ordered tour processing is controlled in the CPU 21, a presentation control portion 61, a reception portion 62 and a sequence setting portion 63 function. As a region of the storage portion 28, plan information DB 71 is provided.

The plan information DB 71 is a database (DB) which holds, for each plan, plan information 51 including the details of the plan of the activity. The planner operates the planner terminal 2 to produce the plan information 51 on the plan of a predetermined activity, and transmits it to the server 1. As long as the plan information 51 includes the details of the plan of an activity, the ID of the plan and the constraint conditions of the plan, the form thereof, a storing method within the plan information DB 71 and the like are not particularly limited.

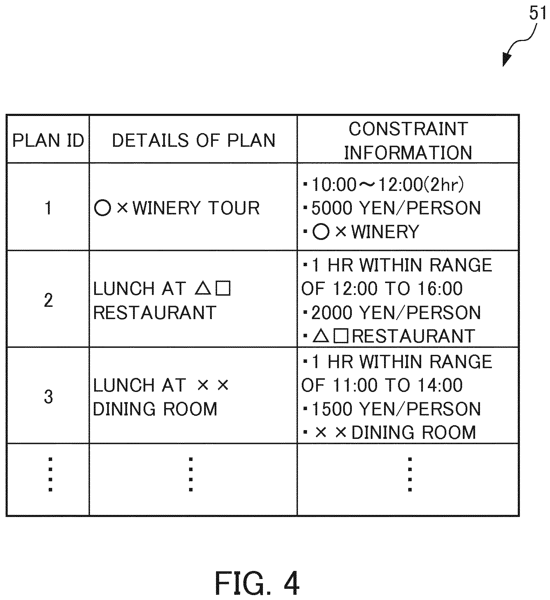

However, in the present embodiment, for example, the plan information DB 71 is assumed to have a structure shown in Fig. 4. Fig. 4 is a diagram showing an example of the structure of the plan information DB 71. As shown in Fig. 4, one row of the plan information DB 71 is associated with the plan of one activity. In other words, in the Kth row of the plan information DB 71 (K is an integer value equal to or more than 1), plan information 51-K on the plan of one activity is stored. The plan information 51-K includes a plan ID, the details of the plan and constraint conditions.

The plan ID is an identifier for uniquely identifying a plan, and in the example of Fig. 4, for convenience, "K" is provided as the ID.

The details of the plan are information which indicates the details of the plan, and for example, in the plan information 51-1, the details of the plan are "Ox winery tour", in the plan information 51-2, the details of the plan are "lunch at Δ□ restaurant" and in the plan information 51-3, the details of the plan are "lunch at xx dining room". Since the details of the plan are presented to the user, not only the outline shown in Fig. 4 but also details can naturally be included.

The constraint conditions are constraint conditions which are imposed on users who participate in the plan, and mainly include, as shown in Fig. 4, a time zone which restricts the users, a price which the users pay (budget) and a place at which the users stay but the constraint conditions are not limited to them. In other words, the constraint conditions of the plan of one activity are constraint conditions which the planner can freely set, and it is possible to adopt an arbitrary number of condition groups of arbitrary combinations. For example, it is possible to set arbitrary attributes of the user such as the gender and age of the user and the skill of the user to the constraint conditions. Specifically, for example, in the plan information 51-1, "10:00 to 12:00 (2 hr), 5000 yen/person, Ox winery" are constraint conditions. In the plan information 51-2, "1 hr within the range of 12:00 to 16:00, 2000 yen/person, Δ□ restaurant" are constraint conditions. In the plan information 51-3, "1 hr within the range of 12:00 to 16:00, 2000 yen/person, xx dining room" are constraint conditions.

With reference back to Fig. 3, the presentation control portion 61 performs control on the presentation of a plurality of pieces of plan information 51 from the plan information DB 71 to the user through the user terminal 3. The presentation method is not particularly limited. For example, it is possible to adopt a method of presenting the pieces of plan information which are posted on a web page managed by the server 1 when the user accesses the web page through the user terminal 3. For example, it is possible to adopt a method of presenting the pieces of plan information to the user by transmitting electronic mail or the like to the user terminal 3. It is possible to adopt various types of methods including, for example, a method in which the user is made to install a dedicated application (software program) in the user terminal 3 and in which thus the pieces of plan information are presented through the application.

The user operates the user terminal 3 so as to select, from among the pieces of plan information presented as described above, one or more pieces of plan information which are desired to be included in the tour of the user (all the schedule of the travel). In other words, the selected one or more pieces of plan information are transmitted through the network N to the server 1. The reception portion 62 receives the pieces of plan information selected by the user (the pieces of plan information received by the communication portion 29 of Fig. 2).

The sequence setting portion 63 sets, within the range of constraint conditions included in a plurality of the pieces of plan information received by the reception portion 62, respectively, for the user, the sequences of the plans of activities identified by each of the pieces of plan information.

For example, when the plan IDs = 1 and 2 in Fig. 4 are selected by the user, the sequences of the plan ID1 and the plan ID2 are set according to the time zone of the constraint conditions. In the following description, the plan (activity) of a plan IDk (k is an arbitrary integer value) is simply represented by the "plan IDk". In other words, the tour (the schedule of the travel) in which after the plan ID1, the plan ID2 is formed is set.

Here, the constraint conditions of the plan ID2 include the condition "1 hr within the range of 12:00 to 16:00". The traveling time from the "Ox winery" of the constraint condition (location constraint condition) of the plan ID2 to the "Δ□ restaurant" of the constraint condition (location constraint condition) of the plan ID1 is assumed to be, for example, 30 minutes. In this case, the finish time of the plan ID1 is 12:00, and with consideration given to the travelling time of 30 minutes, the start time of the plan ID2 needs to be set to a time after at least 12:30. Hence, for example, when the time zone of the plan ID2 is set to 1 hr of "12:00 to 13:00", it is practically impossible for the user to participate in the plan ID2 after the completion of the plan ID1. Hence, the sequence setting portion 63 further regards the travelling time as one of "constraint conditions between the plans", and sets the plan ID2 within the range of the constraint conditions. For example, the sequence setting portion 63 can set the time zone of the plan ID2 to 1 hr of "12:45 to 13:45". As the constraint conditions between the plans as described above, arbitrary conditions such as a travelling time and a toilet break can be set.

Furthermore, the reception portion 62 can receive constraint conditions on the side of the user together with the plan information selected by the user. The constraint conditions on the side of the user are not particularly limited, and it is possible to set arbitrary conditions desired by the user such as conditions on time (for example, the start time is a time after 10 o'clock, the finish time is a time until 20 o'clock and the total time is desired to be the shortest time), conditions on location (for example, only within OΔ city) and conditions on price (for example, the price is desired to be the cheapest price). Within the range of not only the constraint conditions of the plans included in the pieces of plan information received, respectively, but also the constraint conditions on the side of the user, the sequence setting portion 63 sets, for the user, the sequences of the plans of the activities identified by each of the pieces of plan information. For example, the constraint condition on the side of the user is assumed to be a condition in which the total is within 6500 yen. In this case, in the combination of the plan ID1 and the plan ID2, the total is 7000 yen, and thus it is impossible to satisfy the constraint condition on the side of the user (within 6500 yen). Hence, the sequences of the plan ID1 and the plan ID2 are set so as to satisfy the constraint condition on the side of the user. As described above, with further consideration given to the constraint conditions on the side of the user, the sequences of the plans of the activities which are the most suitable for the user are automatically determined. In this way, it is possible to easily configure a so-called semi-ordered tour which is further suitable for the user.

Furthermore, the constraint conditions of a predetermined plan may include a condition on the number of users (such as the minimum and maximum numbers of participants). In such a case, the sequence setting portion 63 sets, for each of a plurality of users who selects the predetermined plan, the sequences of the plans of activities within the range of the constraint conditions of the predetermined plan. Even when the constraint condition on the number of users such as the minimum and maximum numbers of participants is included, the sequences of the plans of the activities which are the most suitable for a plurality of the users are automatically determined. For example, the sequences are set such that plans which do not satisfy the minimum number of participants are omitted. By contrast, for plans which exceed the maximum number of participants, for example, the sequences are set on a first-come first-serve basis for users up to the maximum number of participants such that the plans are included whereas the sequences are set for the other users such that the plans are omitted. In this way, it is possible to easily configure a so-called semi-ordered tour which is further suitable for a plurality of the users.

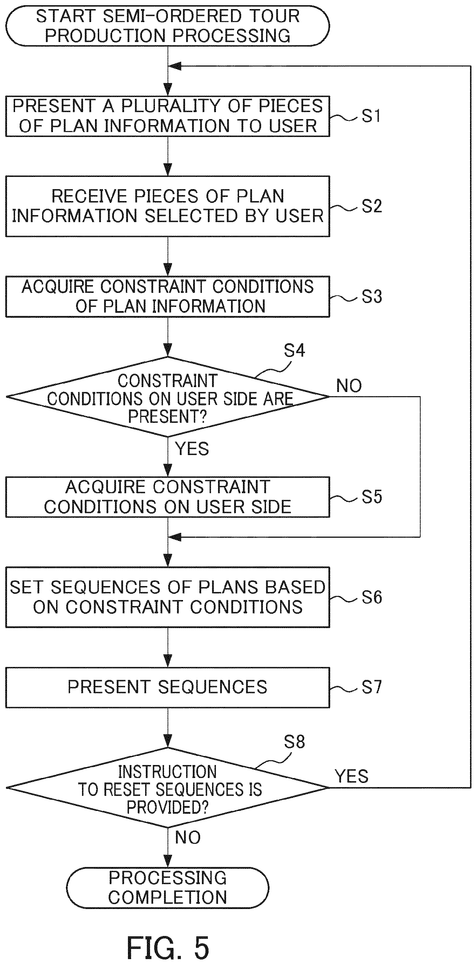

The semi-ordered tour processing which is performed by the server 1 of the functional configuration shown in Fig. 3 as described above will then be described with reference to Fig. 5. Fig. 5 is a flowchart illustrating the flow of the semi-ordered tour processing which is performed by the server 1 of Fig. 2 having the functional configuration of Fig. 3.

In step S1, the presentation control portion 61 presents a plurality of pieces of plan information to the user through the user terminal 3. The user selects, through the user terminal 3, from among the pieces of plan information, plan information on the plans which are desired to be incorporated in the tour. In step S2, the reception portion 62 receives the plan information selected by the user in this way.

In step S3, the sequence setting portion 63 acquires constraint conditions on the plan information received in step S2.

In step S4, the reception portion 62 determines whether or not constraint conditions on the side of the user are present. When the user selects the plan information through the user terminal 3, the user can set arbitrary conditions. When such a setting is performed, a determination of yes is made in step S4, and the process proceeds to step S5. In step S5, the reception portion 62 acquires the constraint conditions on the side of the user. Thus, the process proceeds to step S6. By contrast, when such a setting is not performed, a determination of no is made in step S4, and the process proceeds to step S6 without the processing in step S5 being performed.

In step S6, the sequence setting portion 63 sets the sequences of the plans based on the constraint conditions. In step S7, the presentation control portion 61 presents the sequences set in the processing of step S6 to the user through the user terminal 3.

In step S8, the reception portion 62 determines whether or not an instruction to reset the sequences is provided. When the instruction to reset the sequences is provided, a determination of yes is made in step S8, the process is returned to step S1 and the subsequent processing is repeated. By contrast, when the instruction to reset the sequences is not provided, a determination of no is made in step S8, and the semi-ordered tour is completed.

The present invention is not limited to the embodiment described above, and variations, modifications and the like are included in the present invention as long as the object of the present invention can be achieved.

In other words, as long as the information processing device to which the present invention is applied has the following configuration, the embodiment is not particularly limited.

Specifically, the information processing device to which the present invention is applied includes:
a storage control means which performs control on the storage of a plurality of pieces of plan information that includes details of a plan of an activity, the ID of the plan and constraint conditions of the plan, into a database;
a reception means which receives, among the pieces of plan information stored in the database, pieces of plan information selected by a user; and
a setting means which sets, for the user, within a range of constraint conditions of plans included in the pieces of plan information received, respectively, sequences of the plans of activities identified by each of the pieces of plan information.

In the information processing device described above, within the range of the constraint conditions, the sequences of the plans of the activities suitable for the user are automatically determined, and thus it is possible to easily configure the so-called semi-ordered tour which is suitable for the user.

Here, in the information processing device, the reception means may further receive constraint conditions on the side of the user together with the pieces of plan information selected by the user, and the setting means may further set, for the user, within a range of not only the constraint conditions of the plans included in the pieces of plan information received, respectively, but also the constraint conditions on the side of the user, sequences of the plans of the activities identified by each of the pieces of plan information. In this case, with further consideration given to the constraint conditions on the side of the user, the sequences of the plans of the activities which are the most suitable for the user are automatically determined. In this way, it is possible to easily configure the so-called semi-ordered tour which is further suitable for the user.

In the information processing device, constraint conditions of a predetermined plan may include a condition on the number of users (such as the minimum and maximum numbers of participants), and the setting means may set, for each of a plurality of users who selects the predetermined plan, within a range of the constraint conditions of the predetermined plan, sequences of the plans of the activities. In this way, even when the constraint condition on the number of users such as the minimum and maximum numbers of participants is included, the sequences of the plans of the activities which are the most suitable for a plurality of the users are automatically determined. In this way, it is possible to easily configure the so-called semi-ordered tour which is further suitable for each of a plurality of the users.

For example, the constraint conditions may be weighted (prioritized) such that the sequences are set according to the weighting. For example, it is possible to set sequences on price priority (such as sequences on the cheapest price), sequences on time priority (such as sequences on the shortest time route), sequences on the priority of details and the like. In this case, the presentation of the sequences does not particularly need to be performed for one type, and a plurality of types, for example, three types which are the sequences on price priority (such as sequences on the cheapest price), the sequences on time priority (such as sequences on the shortest time route) and the sequences on the priority of details may be presented to the user. In this way, it is possible to extend, for the user, the range of the production of the semi-ordered tour. In other words, it is possible to produce the semi-ordered tour from various viewpoints.

For example, when sequences are not successfully set within the range of the constraint conditions, predetermined error processing is performed, and the user is notified that an error occurs, with the result that this is convenient for the user.

The series of processing steps described above can be performed by hardware or can be performed by software. In other words, the functional configuration of Fig. 3 is only illustrative, and there is no particular limitation. Specifically, as long as the server 1 has the function of performing the series of processing steps described above as a whole, what types of functional blocks are used to achieve this function is not particularly limited to the example of Fig. 3. One functional block may be formed with hardware alone, may be formed with software alone or may be formed with a combination thereof.

When the series of processing steps are performed by software, the programs of the software are installed in a computer or the like from a network or a recording medium. The computer may be a computer which is incorporated in dedicated hardware. The computer may be a computer which can perform various types of functions by installing various types of programs, and may be, for example, a general-purpose personal computer.

The recording medium including the programs described above is formed with the removable medium 31 of Fig. 2 which is distributed separately of the device main body in order to provide the programs to the user or is formed with a recording medium or the like which is provided to the user in a state where it is previously incorporated in the device main body. The removable medium 31 is formed with, for example, a magnetic disk (including a floppy disk), a Blu-ray (registered trademark) disc (Blu-ray disc), an optical disk, or a magneto-optical disk. The optical disk is formed with, for example, a CD-ROM (Compact Disk-Read Only Memory) or a DVD (Digital Versatile Disk). The magneto-optical disk is formed with, for example, an MD (Mini-Disk). The recording medium which is provided to the user in a state where it is previously incorporated in the device main body is formed with, for example, the ROM 22 of Fig. 2 where programs are recorded or a hard disk included in the storage portion 28 of Fig. 2.

In the present specification, a step of describing programs recorded in a recording medium includes not only processing which is performed sequentially and chronologically but also processing which is performed parallel or individually without being performed chronologically. In the present specification, the term of the system means an overall device which is formed with, for example, a plurality of devices or a plurality of means.

### EXPLANATION OF REFERENCE NUMERALS

1: server, 2, 2-1 to 2-N: planner terminal, 3, 3-1 to 3-M: user terminal, 21: CPU, 22: ROM, 23: RAM, 24: bus, 25: input/out interface, 26: output portion, 27: input portion, 28: storage portion, 29: communication portion, 30: drive, 31: removable medium, 61: presentation control portion, 62: reception portion, 63: sequence setting portion, 71: plan information DB

## Claims

1. An information processing device comprising:
a reception means which receives, among pieces of plan information that include details of a plan of an activity, an ID of the plan and constraint conditions of the plan and that are stored in a database, pieces of plan information selected by a user; and
a setting means which sets, for the user, within a range of constraint conditions of plans included in the pieces of plan information received, respectively, sequences of the plans of activities identified by each of the pieces of plan information.

2. The information processing device according to claim 1,
wherein the reception means further receives constraint conditions on a side of the user together with the pieces of plan information selected by the user, and
the setting means further sets, for the user, within a range of not only the constraint conditions of the plans included in the pieces of plan information received, respectively, but also the constraint conditions on the side of the user, sequences of the plans of the activities identified by each of the pieces of plan information.

3. The information processing device according to claim 1 or 2, wherein constraint conditions of a predetermined plan include a condition on a number of users, and
the setting means sets, for each of a plurality of users who selects the predetermined plan, within a range of the constraint conditions of the predetermined plan, sequences of the plans of the activities.

4. An information processing method which is performed by an information processing device, the information processing method comprising:
a reception step of receiving, among a plurality of pieces of plan information that includes details of a plan of an activity, an ID of the plan and constraint conditions of the plan and that are stored in a database, pieces of plan information selected by a user; and
a setting step of setting, for the user, within a range of constraint conditions of plans included in the pieces of plan information received, respectively, sequences of the plans of activities identified by each of the pieces of plan information.

5. A program which instructs a computer for controlling an information processing device to perform control processing,
wherein the control processing includes:
a reception step of receiving, among a plurality of pieces of plan information that includes details of a plan of an activity, an ID of the plan and constraint conditions of the plan and that are stored in a database, pieces of plan information selected by a user; and
a setting step of setting, for the user, within a range of constraint conditions of plans included in the pieces of plan information received, respectively, sequences of the plans of activities identified by each of the pieces of plan information.
